# EUROPÄISCHE PATENTANMELDUNG

(11) **EP 1 688 597 A2**
(43) Veröffentlichungstag der Anmeldung: **09.08.2006**
(21) Anmeldenummer: 06450014.3
(22) Anmeldetag: 27.01.2006
(51) Int. Cl.: F01N 1/10, F01N 3/28, F01N 3/033, F01N 3/035

(54) **Abgasreinigungsvorrichtung**

(30) Priorität: 02.02.2005 AT 1692005
(71) Anmelder: Pankl Emission Control Systems GmbH, 8605 Kapfenberg (AT)
(72) Erfinder: Mayer, Hanspeter, 5421 Adnet (AT); Male, Alexander, 8700 Leoben (AT); Klawatsch, Dominikus, 7203 Weisen (AT)
(74) Vertreter: Wirnsberger, Gernot

(57) **Zusammenfassung**

Die Erfindung hat eine Vorrichtung (1) zum Reinigen von Abgasen von Kraftfahrzeugen, umfassend ein Gehäuse (2) mit einer Einlassöffnung (3) und einer Auslassöffnung (4) für das Abgas und zumindest ein im Gehäuse (2) angeordnetes, einen Abgaszulaufbereich (5) und einen davon getrennten Abgasablaufbereich (6) innerhalb des Gehäuses (2) gasdurchlässig verbindendes Modul (7) zum Reinigen des Abgases zum Gegenstand. Um unter Berücksichtigung von Einbauraum und zulässiger Druckdifferenz ein großes Volumen an Modul bzw. Modulen zum Reinigen des Abgases zu erreichen, ist erfindungsgemäß vorgesehen, dass das Modul (7) zu einer Längsachse (Y) des Gehäuses (2) geneigt angeordnet ist.

## Beschreibung

Die Erfindung betrifft eine Vorrichtung zum Reinigen von Abgasen von Kraftfahrzeugen, umfassend ein Gehäuse mit einer Einlassöffnung und einer Auslassöffnung für das Abgas und zumindest ein im Gehäuse angeordnetes, einen Abgaszulaufbereich und einen davon getrennten Abgasablaufbereich innerhalb des Gehäuses gasdurchlässig verbindendes Modul zum Reinigen des Abgases.

Kraftfahrzeugabgase, welche ungereinigt oder wenig gereinigt von PKWs und Nutzfahrzeugen bei deren Betrieb ausgestoßen werden, werden als eine der Hauptursachen von Umweltverschmutzung angesehen. In vielen Staaten bzw. Regionen wird deswegen versucht, dieser tendenziell zunehmenden, nachteiligen Belastung der Umwelt durch gesetzgeberische Maßnahmen, nämlich Vorschreiben von zulässigen Schadstoffhöchstwerten für Abgase von Kraftfahrzeugen, entgegen zu treten.

Da mit neuen gesetzgeberischen Maßnahmen bzw. Normen die Schadstoffhöchstwerte für Abgase regelmäßig weiter gesenkt werden, besteht auf Seite der Automobilhersteller eine stetige Anforderung, Abgase von Kraftfahrzeugen besser bzw. wirkungsvoller zu reinigen. Man bemüht sich daher intensiv, den Wirkungsgrad von Reinigungsmodulen für Kraftfahrzeugabgase zu erhöhen.

Bislang waren die Bestrebungen dahin gerichtet, einen Wirkungsgrad bzw. eine Reinigungswirkung von Modulen zur Reinigung von Kraftfahrzeugabgasen durch Verbesserung einer Qualität der Module, beispielsweise durch Aufbringen von effektiveren Katalysatoren zur Umwandlung von Stickoxiden oder durch wirksamere Partikelfilter zu steigern.

Module zur Reinigung von Kraftfahrzeugabgasen werden in den Abgastrakten von Kraftfahrzeugen vorgesehen. Beispielsweise werden Partikelfilter in der Regel in den Gehäusen von Endschalldämpfern angebracht, welche gut zugänglich sind, was ein einfaches Nachrüsten von partikelfilterfrei ausgelieferten Kraftfahrzeugen ermöglicht. Vor allem bei einem Nachrüsten ergibt sich allerdings eine duale Problematik. Einerseits ist ein Einbauraum für nachträglich einzusetzende Module begrenzt. Andererseits können nicht beliebig viele Module hintereinander angebracht werden, weil dann an den zwischen Abgaszulaufbereich und Abgasablaufbereich angeordneten Modulen ein derart hoher Druck aufgebaut wird, dass eine Motorleistung absinkt. Anders ausgedrückt: Ein Einbauraum und eine zulässige Druckdifferenz zwischen Abgaszulaufbereich und Abgasablaufbereich sind vorgegeben.

Nach Erkennen dieser Problematik ist es Aufgabe der vorliegenden Erfindung, eine Vorrichtung der eingangs genannten Art anzugeben, bei welcher unter Berücksichtigung von Einbauraum und zulässiger Druckdifferenz ein großes Volumen an Modul bzw. Modulen zum Reinigen des Abgases gegeben ist.

Die gestellte Aufgabe wird dadurch gelöst, dass bei einer gattungsgemäßen Vorrichtung das Modul zu einer Längsachse des Gehäuses geneigt angeordnet ist. Vorteilhafte Ausgestaltungen einer erfindungsgemäßen Vorrichtung sind Gegenstand der abhängigen Ansprüche 2 bis 15.

Die mit der Erfindung erzielten Vorteile sind insbesondere darin zu sehen, dass bei Berücksichtigung einer zulässigen Druckdifferenz durch eine geneigte Anordnung des/der Module(s) relativ zu einer Längsachse des Gehäuses größere Module im Gehäuse unterbringbar sind als bei einer Anordnung senkrecht zur Längsachse. Somit ist ein Modulvolumen bzw. eine katalytisch wirksame oder filteraktive Moduloberfläche maximiert und ein vorgegebenes Volumen des Einbauraumes verbessert ausgenützt. Da im Vergleich mit Anordnung des/der Module(s) senkrecht zur Längsachse für den Abgasstrom die Länge eines Strömungsweges von Abgaszulaufbereich zu Abgasablaufbereich konstant gehalten werden kann, ein Strömungsquerschnitt jedoch erhöht ist, kommt es gleichzeitig trotz erhöhtem Modulvolumen bzw. abgasreinigungsaktivem Material zu einer Erniedrigung einer Druckdifferenz zwischen Abgaszulaufbereich zu Abgasablaufbereich.

Bevorzugt ist es, wenn das das Modul mit einem Neigungswinkel von 15° bis 75° zur Längsachse des Gehäuses geneigt angeordnet ist. In diesem Bereich des Neigungswinkels kann eine vorteilhaft wirksame Erhöhung der Moduloberfläche bei guter Anströmung der Modulstirnseiten durch Abgas erreicht werden.

In einer Variante der Erfindung ist das Gehäuse im Wesentlichen zylinderförmig ausgebildet. Weist das zylinderförmige Gehäuse stirnseitig eine Einlassöffnung und endseitig eine Auslassöffnung auf, beispielsweise wenn die Vorrichtung ein Schalldämpfer ist, so können das oder die Module im Wesentlichen über eine gesamte Länge des Gehäuses angeordnet werden.

Günstig kann es weiter sein, wenn das Modul zumindest teilweise aus Metallschaum gebildet ist. Strömt Abgas durch Metallschaum, so kommt es aufgrund einer labyrinthartigen Porenstruktur des Metallschaums zu einer Vergleichmäßigung bzw. Homogenisierung des Abgasstromes über dessen Querschnitt und allfällige Inhomogenitäten können ausgeglichen werden. In diesem Zusammenhang hat es sich auch bewährt, wenn bei Modulen mit mehreren zusammen geschalteten, schichtförmigen Filter- und Katalysatorelementen zusätzlich ein dem Abgaszulaufbereich zugewandetes Element aus einem reinem Metallschaum vorgesehen ist, welcher vorzugsweise eine Porosität von 80 bis 98 % und eine Porenweite von 4 bis 30 ppi (pores per inch) aufweist. Auch nachgeschaltete Katalysator- und/oder Filterelemente des Moduls können zweckmäßigerweise im Wesentlichen aus Metallschaum bestehen oder einen solchen zumindest als Träger für katalytisch aktive Substanzen aufweisen. In diesem Fall ergeben sich eine ausgewogene Strömungsverteilung und Strömungsgeschwindigkeit im Modul und es wird Druck- und Temperaturinhomogenitäten effektvoll entgegengewirkt.

In einer besonders vorteilhaften Variante umfasst das Modul mehrere Filterelemente und/oder Katalysatorelemente, um durch das Modul geleitetes Abgas möglichst vollständig zu reinigen.

In einer erfindungsgemäßen Vorrichtung können ein oder, alternativ, mehrere voneinander beabstandete Module angeordnet sein, um eine Abgasströmung innerhalb des Gehäuses zu optimieren.

Wenn bei einer querschnittlichen Betrachtung das Modul im Wesentlichen den gesamten Querschnitt des Gehäuses abdeckt, ist eine vorteilhaft große Anströmfläche für Abgas gegeben.

In einer Ausführungsvariante der Erfindung ist das Modul mit dem Gehäuse verbunden. Beispielsweise kann das Modul bei entsprechender Dimensionierung in das Gehäuse geklemmt werden. Dieses Vorgehen eignet sich im Besonderen für ein Nachrüsten von Kraftfahrzeugen, weil ein Aufwand für ein nachträgliches Einbringen von Modulen zur Reinigung von Abgasen gering gehalten werden kann. Selbstverständlich ist es aber auch möglich, das Modul auf andere Weise mit dem Gehäuse zu verbinden, z.B. durch metallisches Verbinden wie Schweißen oder Löten oder mittelbar durch eine Quellmatte.

In einer Alternative zur vorstehenden Ausführungsvariante ist das Modul von einem gasdichten und mit dem Gehäuse verbundenen Tragelement vom Gehäuse beabstandet gehalten und durchsetzt das Modul das Tragelement, um eine Gasströmung zwischen Abgaszulaufbereich und Abgasablaufbereich zu ermöglichen. Insbesondere wenn mehrere Module vorgesehen sind, erweist sich ein Tragelement als günstig, weil dann einzelne Module bei Bedarf justiert werden können und in ihrer Ausrichtung den Strömungsverhältnissen innerhalb des Gehäuses bzw. der Vorrichtung angepasst werden können.

Aus Gründen einer thermischen und mechanischen Belastbarkeit des Tragelementes und um einen Raumbedarf für das Tragelement gering zu halten, ist es bevorzugt, wenn das Tragelement eine metallische Platte ist.

Das oder die Modul(e) können von beliebiger geometrischer Gestalt sein, wobei eine zylinderförmige Ausbildung strömungstechnisch von Vorteil sein kann. Eine Anordnung im Tragelement erfolgt dann zweckmäßigerweise in der Art, dass das Modul das Tragelement mit einer Modullängsachse durchsetzt. Dabei ist es von Vorteil, wenn die Module bereichsweise gasdicht ummantelt sind, so dass Abgas nach Eintritt in das Modul im Abgaszulaufbereich dieses Modul jedenfalls vollständig durchströmen muss.

Von herausragendem Vorteil ist es, wenn das Tragelement derart am Gehäuse angebracht ist, dass der Abgaszulaufbereich in Richtung von der Einlassöffnung zur Auslassöffnung hin konisch zulaufend ausgebildet ist. Durch diese geometrische Gestaltung wird den Strömungsverhältnissen insbesondere in einem zylinderförmigen Gehäuse besonders Rechnung getragen: Im Bereich nahe der Einlassöffnung, wo große Abgasvolumina gegeben sind, weist der Abgaszulaufbereich dann einen großen Querschnitt auf. Hingegen weist der Abgaszulaufbereich an einer Stelle, wo ein geringes Abgasvolumen gegeben ist, weil bereits ein Großteil des Abgases in das bzw. die Module eingeströmt ist, einen kleinen Querschnitt auf. Somit sind die örtlichen Volumenverhältnisse des Abgaszulaufbereichs den lokal gegebenen Abgasvolumen gezielt angepasst. Das hat zu Folge, dass zum einen alle Modulbereiche bzw. alle Module etwa gleichwertig angeströmt bzw. belastet werden und dass zum anderen annähernd gleiche Druck- und Temperaturverhältnisse im gesamten Modul bzw. den einzelnen Modulen erreicht wird.

Um ein gleichmäßiges Anströmen des oder der Module mit Abgas zu ermöglichen, kann es weiter von Vorteil sein, dass zumindest eine Einrichtung zur Strömungsführung, beispielsweise ein Leitblech, vorgesehen ist.

Weitere Vorteile und Wirkungen der Erfindung ergeben sich aus dem Zusammenhang der Beschreibung und den Ausführungsbeispielen.

Im Folgenden sind Ausführungsbeispiele der Erfindung anhand von Figuren erläutert und ist die Erfindung noch weitergehend beschrieben. Es zeigen:
Figur 1: Einen Schnitt durch eine ein einziges Modul aufweisende Vorrichtung;
Figur 2: Einen Schnitt durch eine erfindungsgemäße Vorrichtung mit fünf zylinderförmigen Modulen;
Figur 3: Einen Querschnitt durch eine erfindungsgemäße Vorrichtung mit mehreren verschiedene Katalysator- und Filterelemente aufweisenden Modulen.

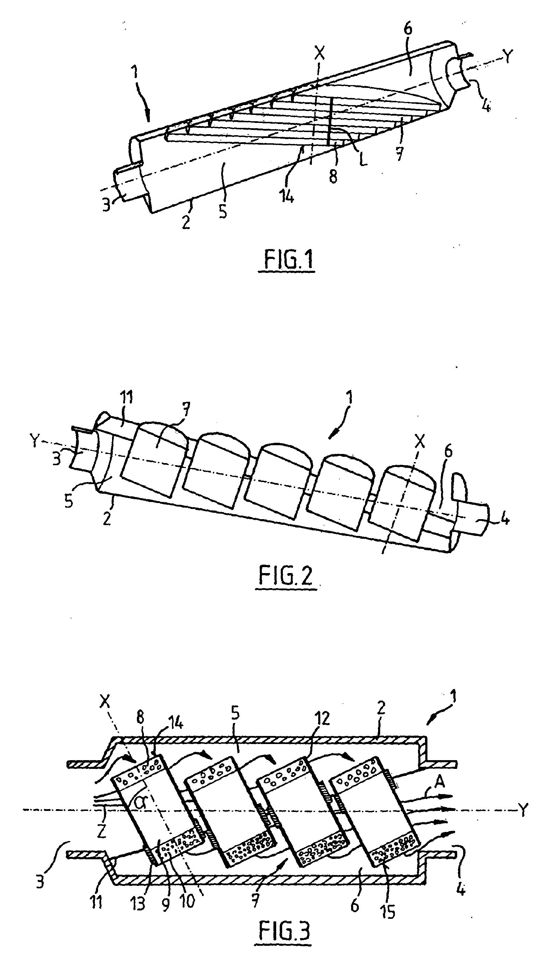

In Figur 1 ist eine erfindungsgemäße Vorrichtung 1 gezeigt, welche ein längliches, zylinderförmiges Gehäuse 2 mit einer angeformten Einlassöffnung 3 und einer Auslassöffnung 4 aufweist. In das Gehäuse 2 sind mehrere schicht- bzw. plattenförmige Elemente eines Moduls 7 derart eingelegt bzw. eingeklemmt, dass eine angeströmte Oberfläche der einzelnen Elemente bzw. eine Modulachse X, welche einer Normalen zu den parallelen Oberflächen der Schichten entspricht, zu einer Gehäuselängsachse Y geneigt ist. Die einzelnen schichtförmigen Elemente des Moduls 7 können je nach gewünschter Reinigungswirkung Katalysator- bzw. Filterelemente sein und bestehen allesamt im Wesentlichen aus einem Metallschaum, welcher gegebenenfalls eine katalytisch aktive Substanz trägt bzw. mit einer solchen beschichtet ist; weiter ist ein offenporiger Metallschaumkörper 8 vorgesehen. Wie aus Figur 1 ersichtlich, sind die einzelnen Elemente des Moduls 7 so dimensioniert, dass quer zur Gehäuselängsachse Y im Wesentlichen der gesamte freie Querschnitt abgedeckt ist.

Tritt nun Abgas durch die Einlassöffnung 3 in einen Abgaszulaufbereich 5 innerhalb des Gehäuses 2 ein, so wird zuerst der Metallschaumkörper 8 durchströmt und dann die nachgeschalteten Elemente des Moduls 7, ehe das Abgas in den Abgasablaufbereich 6 gelangt und anschließend durch die Auslassöffnung 4 gereinigt austritt.

Eine Druckdifferenz zwischen Abgaszulaufbereich 5 und Abgasablaufbereich 6 wird unter anderem durch die Länge eines minimalen Strömungsweges L für das Abgas durch die zusammen geschalteten Elemente des Moduls 7 bestimmt. Im Vergleich mit einer bislang erfolgten Anordnung von Modulen 7, nach der Module 7 mit einer Modulachse X parallel zu einer Gehäuseachse Y angeordnet waren, zeigt sich, dass bei geneigter Anordnung die Länge eines minimalen Strömungsweges L unter gleichzeitiger Vergrößerung einer Gaseintrittsfläche 14 und unter Erhöhung eines Modulvolumens gleich gehalten werden kann. Deswegen kann bei einer erfindungsgemäßen Vorrichtung 1 nicht nur eine verbesserte Reinigungswirkung, sondern auch eine geringe Druckdifferenz zwischen Abgaszulaufbereich 5 und Abgasablaufbereich 6 erreicht werden.

In Figur 2 ist ein zweites Ausführungsbeispiel der erfindungsgemäßen Vorrichtung in einem Schnitt dargestellt. In einem zylinderförmigen Gehäuse 2, welches eine Einlassöffnung 3 und eine Auslassöffnung 4 für das Abgas aufweist, sind mehrere zylinderförmige Module 7 in einem Tragelement 11 aufgenommen, welches zusammen mit den Modulen 7 einen Abgaszulaufbereich 5 von einem Abgasablaufbereich 6 trennt. Dabei verläuft in Richtung von der Einlassöffnung 3 zur Auslassöffnung 4 das Tragelement 11 im Gehäuse 2 in der Art, dass der Abgaszulaufbereich 5 konisch zulaufend ausgebildet ist, wohingegen der Abgasablaufbereich 6 komplementär dazu konisch verbreiternd verläuft. Durch diese Unterteilung des Gehäusevolumens wird ermöglicht, dass die einzelnen Module 7 in Bezug auf Abgasvolumen und Strömungsgeschwindigkeit gleichmäßig anströmt und belastet werden. Damit im Zusammenhang wird auch erreicht, dass die einzelnen Module 7 im Betrieb etwa die gleiche Temperatur erreichen, was sich in Bezug auf eine etwa gleichwertige Reinigungswirkung der Module 7 günstig auswirkt.

Anhand des in Figur 3 gezeigten Querschnittes einer erfindungsgemäßen Vorrichtung 1 mit insgesamt vier Modulen 7, welche jeweils eine Gaseintrittsfläche 14 und eine Gasaustrittsfläche 15 aufweisen und schichtförmig aus einem Metallschaumkörper 8, einem Katalysatorelement 9 und einem Dieselpartikelfilter 10 aufgebaut sind, ist der Abgasfluss näher gezeigt.

Wie in Figur 2 sind die einzelnen Module 7 mit ihrer Modulachse X, welche normal auf die Oberflächen der schichtförmigen Elemente steht, zu einer Längsachse Y des Gehäuses 2 in einem Neigungswinkel α, der in Figur 3 etwa 60 ° beträgt, angeordnet und in einem Tragelement 11 gehalten. Ebenso wie in Figur 2 sind durch die Anordnung des Tragelements 11 Abgaszulaufbereich 5 und Abgasablaufbereich 6 in zwei im Wesentlichen konisch zulaufende bzw. auseinander laufende Volumina aufgeteilt. Um sicherzustellen, dass Abgas lediglich durch die Module 7 strömen kann, sind diese mit dem gasdichten metallischen Tragelement 11 über ebenfalls gasdichte Verbindungsstellen 13 verbunden und jeweils mit einem gasdichten Mantel 12 versehen. Zulaufendes Abgas Z kann bei dieser Ausgestaltung lediglich über die Gaseintrittsflächen 14 der einzelnen Module 7 in diese eintreten. Aufgrund des durch das Tragelement 11 bedingten konischen Zulaufs des Abgaszulaufbereiches 5 kommt es zu einer gleichmäßigen Aufteilung des Abgases auf die vier gezeigten Module 7, wie durch die entsprechenden Pfeile angedeutet. Nach dem Eintritt in die Module 7 ist das Abgas dann gezwungen durch diese über deren gesamte Länge hindurch zu treten, ehe das Abgas gereinigt an den Gasaustrittsflächen 15 die Module 7 verlassen kann und als ablaufendes Abgas A das Gehäuse durch den Auslass 4 austritt.

Gemäß einem weiteren Ausführungsbeispiel der Erfindung können das Tragelement 11 und die in diesem angebrachten Module 7 zu einem zentrosymmetrische Gebilde angeordnet sein, was die Gefahr eines falschen bzw. verkehrten Einbaus einer vorgefertigten Kombination von Tragelement 11 und Modulen 7 beseitigt.

Die in Figur 1 und 3 gezeigten Katalysator bzw. Filterelemente sind voneinander unterscheidbare Schichten, welche gemäß dem Stand der Technik gefertigt und auf dem Fachmann bekannte Weise miteinander verbunden sind. Der ebenfalls gezeigte, den Katalysator- bzw. Filterelementen vorgeschaltete Metallschaumkörper 8 weist eine innere Struktur mit unregelmäßig verzweigter bzw. labyrinthartigen Kanälen und einer Porosität von 5 bis 20 ppi auf. Damit wird erreicht, dass auf den Metallschaumkörper 8 auftreffendes Abgas im Inneren desselben vergleichmäßigt wird und in der Folge die nachgeschalteten Katalysator- und Filterelemente gleichmäßig angeströmt werden.

## Patentansprüche

1. Vorrichtung (1) zum Reinigen von Abgasen von Kraftfahrzeugen, umfassend ein Gehäuse (2) mit einer Einlassöffnung (3) und einer Auslassöffnung (4) für das Abgas und zumindest ein im Gehäuse (2) angeordnetes, einen Abgaszulaufbereich (5) und einen davon getrennten Abgasablaufbereich (6) innerhalb des Gehäuses (2) gasdurchlässig verbindendes Modul (7) zum Reinigen des Abgases, **dadurch gekennzeichnet, dass** das Modul (7) zu einer Längsachse (Y) des Gehäuses (2) geneigt angeordnet ist.

2. Vorrichtung (1) nach Anspruch 1, **dadurch gekennzeichnet, dass** das Modul (7) mit einem Neigungswinkel (α) von 15° bis 75° zur Längsachse des Gehäuses (2) geneigt angeordnet ist.

3. Vorrichtung (1) nach Anspruch 1 oder 2, **dadurch gekennzeichnet, dass** das Gehäuse (2) im Wesentlichen zylinderförmig ausgebildet ist.

4. Vorrichtung (1) nach einem der Ansprüche 1 bis 3, **dadurch gekennzeichnet, dass** die Vorrichtung (1) ein Schalldämpfer ist.

5. Vorrichtung (1) nach einem der Ansprüche 1 bis 4, **dadurch gekennzeichnet, dass** das Modul (7) zumindest teilweise aus Metallschaum gebildet ist.

6. Vorrichtung (1) nach einem der Ansprüche 1 bis 5, **dadurch gekennzeichnet, dass** das Modul (7) mehrere Filterelemente (10) und/oder Katalysatorelemente (9) umfasst.

7. Vorrichtung (1) nach einem der Ansprüche 1 bis 6, **dadurch gekennzeichnet, dass** mehrere Module (7) voneinander beabstandet angeordnet sind.

8. Vorrichtung (1) nach einem der Ansprüche 1 bis 7, **dadurch gekennzeichnet, dass** bei einer querschnittlichen Betrachtung das Modul (7) im Wesentlichen den gesamten Querschnitt des Gehäuses (2) abdeckt.

9. Vorrichtung (1) nach Anspruch 8, **dadurch gekennzeichnet, dass** das Modul (7) mit dem Gehäuse (2) verbunden ist.

10. Vorrichtung (1) nach einem der Ansprüche 1 bis 7, **dadurch gekennzeichnet, dass** das Modul (7) von einem gasdichten und mit dem Gehäuse (2) verbundenen Tragelement (11) vom Gehäuse (2) beabstandet gehalten ist und das Modul (7) das Tragelement (11) durchsetzt, um eine Gasströmung zwischen Abgaszulaufbereich (5) und Abgasablaufbereich (6) zu ermöglichen.

11. Vorrichtung (1) nach Anspruch 10, **dadurch gekennzeichnet, dass** das Tragelement (11) eine metallische Platte ist.

12. Vorrichtung (1) nach Anspruch 10 oder 11, **dadurch gekennzeichnet, dass** das Modul (7) zylinderförmig ausgebildet ist und das Tragelement (11) mit einer Modullängsachse (X) durchsetzt.

13. Vorrichtung (1) nach einem der Ansprüche 10 bis 12, **dadurch gekennzeichnet, dass** die Module (7) bereichsweise gasdicht ummantelt sind.

14. Vorrichtung (1) nach einem der Ansprüche 10 bis 13, **dadurch gekennzeichnet, dass** das Tragelement (11) derart am Gehäuse (2) angebracht ist, dass der Abgaszulaufbereich (5) in Richtung von der Einlassöffnung (3) zur Auslassöffnung (4) hin konisch zulaufend ausgebildet ist.

15. Vorrichtung (1) nach einem der Ansprüche 1 bis 15, **dadurch gekennzeichnet, dass** die Vorrichtung (1) zumindest eine Einrichtung zur Strömungsführung wie ein Leitblech umfasst.
